Europäisches Patentamt

European Patent Office

Office européen des brevets

(11) Veröffentlichungsnummer: **0 440 878 A2**

# EUROPÄISCHE PATENTANMELDUNG

(21) Anmeldenummer: 90116075.4

(22) Anmeldetag: 22.08.90

(51) Int. Cl.⁵: **A45C 5/14**

(30) Priorität: 06.02.90 DE 4003561

(43) Veröffentlichungstag der Anmeldung:
**14.08.91 Patentblatt 91/33**

(84) Benannte Vertragsstaaten:
**BE DE FR**

(71) Anmelder: **Schneider, Günter**
**Bruckmühle 1**
**W-8488 Erbendorf(DE)**

(72) Erfinder: **Schneider, Günter**
**Bruckmühle 1**
**W-8488 Erbendorf(DE)**

(74) Vertreter: **Liesegang, Roland, Dr.-Ing. et al**
**FORRESTER & BOEHMERT**
**Widenmayerstrasse 4 Postfach 22 01 37**
**W-8000 München 22(DE)**

(54) Koffer mit mindestens drei Rollen zum Transport.

(57) Ein Koffer mit Rollen hat einen Bremsklotz an seinem vorderen unteren Ende, der über eine Hebelvorrichtung zwischen einer Bremsstellung und einer zurückgezogenen Lösestellung beweglich ist. Die Hebelvorrichtung ist so ausgebildet, daß sie in Bremsstellung den Bremsklotz an einer Bewegung in beiden Rollrichtungen des Koffers hemmt.

EP 0 440 878 A2

## KOFFER MIT MINDESTENS DREI ROLLEN ZUM TRANSPORT

Die Erfindung betrifft einen Koffer mit mindestens drei Rollen zum Transport. Solche Koffer können auf schrägen Ebenen, z. B. auf Rollbändern sowie auch auf horizontalen Fahrzeugebenen beim Beschleunigen oder Verzögern des Fahrzeuges selbsttätig in eine unerwünschte Bewegung geraten.

Rollen mit daran vorgesehenen Bremsvorrichtungen sind an sich bekannt. Solche Bremsvorrichtungen sind jedoch für die Anwendung bei Rollenkoffern zu aufwendig.

Der Erfindung liegt die Aufgabe zugrunde, eine Bremsvorrichtung für Rollenkoffer der eingangs beschriebenen Art zu schaffen, die einfach im Aufbau und in der Handhabung ist, um eine unerwünschte Bewegung des damit ausgestatteten Koffers zu verhindern.

Zur Lösung dieser Aufgabe sind erfindungsgemäß die Merkmale des Anspruchs 1 vorgesehen.

Ein Koffer gemäß der Erfindung wird nicht über seine Räder sondern über den gesondert ausfahrbaren Bremsklotz gegenüber seiner Unterlage abgebremst.

Gemäß einer vorteilhaften Ausgestaltung ist dabei die Hebelvorrichtung so gestaltet, daß sie den Bremsklotz in beiden Verfahrrichtungen des Koffers in der ausgefahrenen Bremsstellung blockiert hält.

Vorteilhaft weist die Hebelvorrichtung mindestens einen Hebel auf, der mit seinem einen Ende am Koffer und mit seinem anderen Ende am Bremsklotz angelenkt ist.

Bei einer konstruktiven Ausführung sind zwei Hebel unter einem Winkel zueinander so angeordnet, daß sie den Bremsklotz in einem Bogen um die Koffervorderkante führen. Dabei kann vorteilhafterweise der oder der eine Hebel von einer Lösefeder beaufschlagt sein, die den Hebel in die Lösestellung zu bewegen trachtet, und der oder der andere Hebel kann in der Bremsstellung von einer hand- oder fußbetätigbaren Rastvorrichtung blockierbar sein.

Zur einfachen Betätigung kann die Rastvorrichtung einen Schieber aufweisen, der von einer Sperrfeder in der den Hebel blockieren Stellung gehalten und über einen Zuggriff in eine den Hebel freigebende Stellung entgegen der Kraft der Sperrfeder bringbar ist.

Bei einer anderen Ausführung der Erfindung ist vorgesehen, daß die Hebelvorrichtung einen zweiarmigen Hebel umfaßt, an dessen einem Arm eine Rückholfeder und in entgegengesetzter Richtung ein handbetätigbares Zugband angreifen, und dessen anderer Arm mit dem Bremsklotz zu dessen Verlagerung zusammenwirkt.

Die Erfindung ist im folgenden anhand schematischer Zeichnungen an Ausführungsbeispielen mit weiteren Einzelheiten näher erläutert. Es zeigen:

Fig. 1 eine erste Ausführung des vorderen unteren Endes eines erfindungsgemäßen Koffers in einer teilweise aufgeschnittenen Darstellung;

Fig. 2 in kleinerem Maßstab eine Seitenansicht eines Koffers gemäß Fig. 1, wobei ein Bereich längs der vorderen Kante des Koffers aufgeschnitten ist;

Fig. 3 in einer Darstellung ähnlich Fig. 1 eine andere Ausführung eines Koffers gemäß der Erfindung mit einem Bremsklotz in Lösestellung und

Fig. 4 in einer Darstellung wie Fig. 3 den Bremsklotz in Bremsstellung.

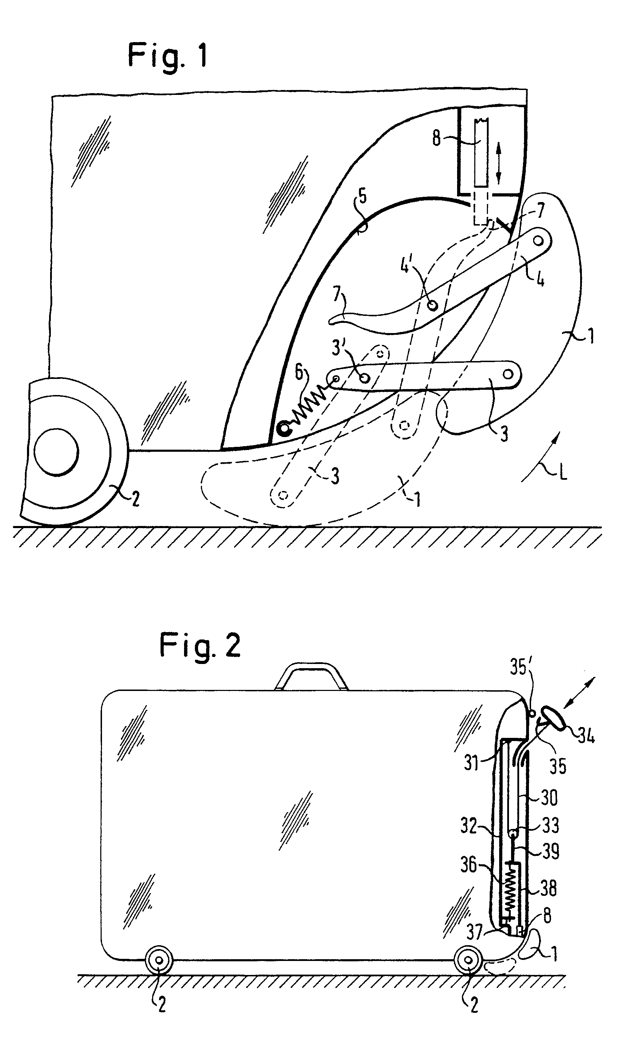

Der Koffer nach Fig. 1 und 2 weist vorne und hinten je zwei Rollen 2 auf. Am vorderen Ende hat der Koffer einen Bremsklotz 1, der in Lösestellung durchgezogen und in Bremsstellung gestrichelt in den Fig. 1 und 2 gezeichnet ist. Der Bremsklotz 1 ist über Hebel 3,4 bei 3',4' in einer Mulde 5 am vorderen Ende des Koffers befestigt. Am kofferseitigen Ende des Hebels 3 greift eine Lösefeder 6 an, welche den Hebel 3 in eine Richtung L zu schwenken sucht, in welcher der Bremsklotz 1 in seine durchgezogene Lösestellung bewegt wird. Der Hebel 4 hat eine gekröpfte Spitze 7, die von einem Schieber 8 in vertikal nach unten ausgefahrener Stellung in gestrichelter Lage, d. h. in Bremsstellung des Bremsklotzes 1, blockiert werden kann. Gemäß Fig. 2 ist der Schieber 8 über ein Zugband 30 betätigbar, das mit seinem kofferseitigen Ende an einem Festpunkt 31 eines festen Gehäuses 32 befestigt und um eine Umlenkrolle 33 geführt ist. An seinem freien Ende hat das Zugband 30 einen Zuggriff 34 mit Haken 35, über welchen der Zuggriff 34 in eine Öse 35 am Koffer einhängbar ist.

Die Umlenkrolle 33 ist über einen Stab 39 mit einer Zugfeder 36 verbunden. Die Zugfeder ist mit ihrem unteren Ende bei 37 am Koffer angelenkt. Eine parallel zur Zugfeder 36 liegende Stange 38 stellt die Verbindung zum Schieber 8 her.

Wird der Zuggriff 34 gegen die Kraft der Zugfeder 37 herausgezogen, so kommt die Spitze 7 des Hebels 4 vom Schieber 8 frei, woraufhin die Lösefeder 6 das Hebelgestänge 3,4 mit dem daran angebrachten Bremsklotz 1 in die durchgezogene Lösestellung verschwenkt. Hierzu ist jedoch erforderlich, daß der Bremsklotz an dieser Schwenkbewegung in Pfeilrichtung L nicht gehindert wird. Aufgrund der dargestellten Konstruktion des Hebelgestänges mit den Hebeln 3,4 würde der Bremsklotz 1 eine Bewegung des Koffers in der gestrichelten Stellung in beiden Rollrichtungen auch bei nicht blockierter Spitze 7 des Hebels 4 verhindern, weil hierzu jeweils die Hebel 3 und 4 aus der gestrichelten Stellung über eine jeweilige Vertikalstellung geschwenkt werden müßten, in welche den Bremsklotz relativ zum Koffer noch weiter aus-gefahren sein würde. Das Hebelgestänge mit den Hebeln 3,4 schafft also allein aufgrund der in Fig. 1 dargestellten Konstruktion eine Blockierung des Bremsklotzes in dessen gestrichelter Bremsstellung gegen ein Bewegen des Koffers in beiden Rollrichtungen.

Um den Bremsklotz 1 durch die Lösefeder 6 zurückzuschwenken, muß der Bremsklotz durch leichtes Anheben der Koffervorderseite deshalb zunächst entlastet werden.

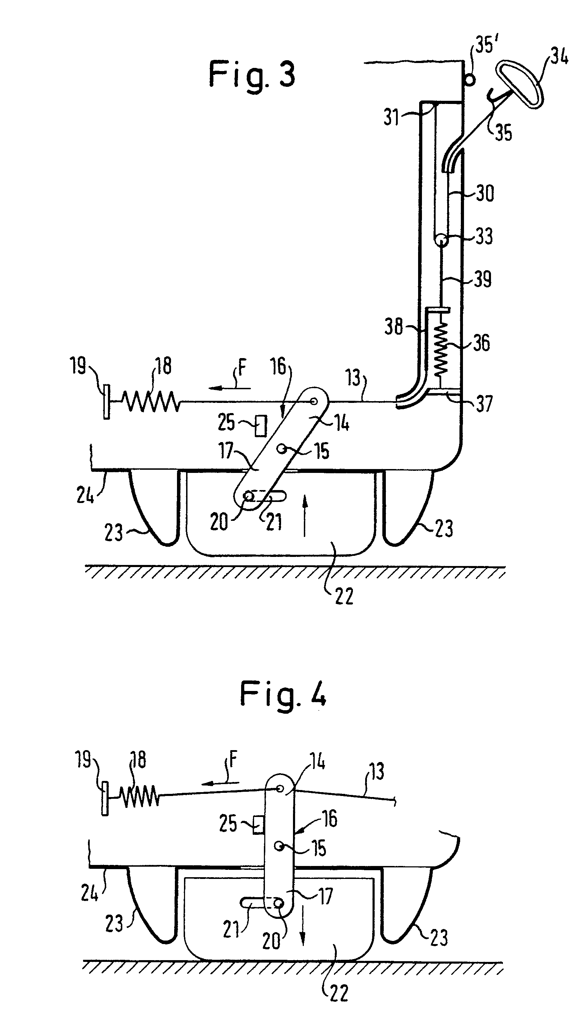

Bei der Ausführung nach den Fig. 3 und 4 ist ein zweiarmiger Hebel 16 bei 15 am Koffer angelenkt. Am einen Arm 14 greift einerseits eine Rückholfeder 18 und andererseits ein Zugband 13 an, das über den Zuggriff 34 ausziehbar ist. Die Anordnung der Teile 30 bis 38 ist gleich wie bei Fig. 2, so daß eine nochmalige Beschreibung sich erübrigt.

Der andere Arm 17 des Hebels 16 wirkt über eine Stift-Schlitzverbindung 20,21 mit dem Bremsklotz 22 zusammen, der in einem vom Kofferboden 24 nach unten ragenden Gehäuse 23 vertikal verschieblich geführt ist.

Wird über das Zugband 13 keine Zugkraft ausgeübt, so zieht die Rückholfeder 18 den Hebel 16 in die in Fig. 4 gezeigte vertikale Stellung, in welcher der Bremsklotz in seine gegen den Untergrund abgesenkte Bremsstellung ausgefahren ist.

Bei beiden gezeigten Ausführungsbeispielen läßt sich der Zuggriff 34 über den Haken 35 in der Öse 35' am Koffer einhängen, wobei der Bremsklotz 1 oder 22 sich in der Bremsstellung befinden. Der Koffer läßt sich dann durch Anheben seines Zugendes mit in die Öse 35' eingehängten Zuggriff auch bei in Bremsstellung befindlichem Bremsklotz weiter bewegen.

## Patentansprüche

1. Koffer mit mindestens drei Rollen zum Transport, dadurch **gekennzeichnet,** daß ein Bremsklotz (1;22) am Koffer mittels einer Hebelvorrichtung (3,4;16) angelenkt ist, welche eine Bewegung des Bremsklotzes (1;22) in eine ausgefahrene Bremsstellung und eine zurückgezogene Lösestellung gestattet.

2. Koffer nach Anspruch 1, dadurch **gekennzeichnet,** daß die Hebelvorrichtung (3,4) den Bremsklotz (1) in beiden Verfahrrichtungen des Koffers in der ausgefahrenen Bremsstellung blockiert hält.

3. Koffer nach Anspruch 1 oder 2, dadurch **gekennzeichnet,** daß die Hebelvorrichtung mindestens einen Hebel (3) umfaßt, der einerseits am Koffer und andererseits am Bremsklotz (1) angelenkt ist.

4. Koffer nach Anspruch 3, dadurch **gekennzeichnet,** daß zwei Hebel (3,4) unter einem Winkel zueinander so angeordnet sind, daß sie den Bremsklotz (1) in einem Bogen um die Koffervorderkante führen.

5. Koffer nach einem der Ansprüche 1 bis 4, dadurch **gekennzeichnet,** daß der oder der eine Hebel (3) von einer Lösefeder (6) beaufschlagt ist, die den Hebel (3) in die Lösestellung zu bewegen trachtet.

6. Koffer nach einem der Ansprüche 1 bis 5, dadurch **gekennzeichnet,** daß der oder der andere Hebel (4) in der Bremsstellung von einer hand- oder fußbetätigbaren Rastvorrichtung (7,8) blockierbar ist.

7. Koffer nach Anspruch 6, dadurch **gekennzeichnet,** daß die Rastvorrichtung einen Schieber (8) aufweist, der von einer Sperrfeder (36) in der den Hebel (4) blockierenden Stellung gehalten und über einen Zuggriff (34) in eine den Hebel (4) freigebende Stellung entgegen der Kraft der Sperrfeder bringbar ist.

8. Koffer nach einem der Ansprüche 1 bis 3, dadurch **gekennzeichnet,** daß die Hebelvorrichtung einen zweiarmigen Hebel (16) umfaßt, an dessen einem Arm (14) eine Rückholfeder (18) und in entgegengesetzter Richtung ein handbetätigbares Zugband (13) angreifen und dessen anderer Arm (17) mit dem Bremsklotz (22) zu dessen Verlagerung zusammenwirkt.

9. Koffer nach Anspruch 8, dadurch **gekennzeichnet,** daß der andere Arm (17) des Hebels (16) über eine Stift-Schlitzverbindung (20,21) mit dem in einem Gehäuse (23) geführten Bremsklotz (22) zusammenwirkt.

10. Koffer nach einem der Ansprüche 7 bis 9, dadurch **gekennzeichnet,** daß der Zuggriff (34) über eine Haken-/Ösenverbindung (35,35') am Koffer einhängbar ist.

Fig. 1

Fig. 2

# Fig. 3

# Fig. 4